# EUROPÄISCHE PATENTANMELDUNG

(11) **EP 3 127 623 A1**
(43) Veröffentlichungstag der Anmeldung: **08.02.2017**
(21) Anmeldenummer: 16182540.1
(22) Anmeldetag: 03.08.2016
(51) Int. Cl.: B21D 1/00, B21D 37/08, B23P 19/02, B60G 7/00, B21D 22/02, B21D 24/16, B21D 53/88

(54) **VERFAHREN ZUR HERSTELLUNG EINES LENKERS AUS EINEM METALLISCHEN WERKSTOFF FÜR EIN KRAFTFAHRZEUG SOWIE UMFORMWERKZEUG ZUR DURCHFÜHRUNG DES VERFAHRENS**

(30) Priorität: 04.08.2015 DE 102015112784
(71) Anmelder: Benteler Automobiltechnik GmbH, 33102 Paderborn (DE)
(72) Erfinder: Jäger, Reinhard, 33104 Paderborn (DE); Meyer, Stephan, 33605 Bielefeld (DE)
(74) Vertreter: Griepenstroh, Jörg

(57) **Zusammenfassung**

Die vorliegende Erfindung betrifft ein Verfahren zur Herstellung eines Lenkers (1), aufweisend folgende Verfahrensschritte:
- Bereitstellen einer Blechplatine (11) oder eines Halbzeuges und Einlegen in ein Umformwerkzeug (12),
- Umformen zu einem Lenker (1),
- Zuführen eines Lagers (4) und Einpressen des Lagers (4) in den Lenker (1) innerhalb des Umformwerkzeuges (12),
- Entnahme aus dem Umformwerkzeug (12).

Die vorliegende Erfindung betrifft weiterhin ein Umformwerkzeug (12) zur Durchführung des Verfahrens.

## Beschreibung

Die vorliegende Erfindung betrifft ein Verfahren zur Herstellung eines Lenkers für ein Kraftfahrzeug aus einem metallischen Werkstoff gemäß den Merkmalen im Patentanspruch 1 sowie des Patentanspruchs 3.

Die vorliegende Erfindung betrifft weiterhin ein Umformwerkzeug zur Herstellung eines Lenkers gemäß den Merkmalen im Oberbegriff von Patentanspruch 9.

Aus dem Stand der Technik ist es bekannt, Lenker für Kraftfahrzeugachsen herzustellen. Im Sinne dieser Erfindung können als Lenker, Spurstangen, Querlenker bzw. auch Stablenker einer Mehrlenkerachse vorgesehen sein.

Diese Lenker können als Guss- oder Schmiedebauteil, jedoch auch als Blechumformbauteil, hergestellt werden. Die Lenker werden im Unterflurbereich eines Kraftfahrzeuges eingesetzt. Im Betrieb sind sie daher verstärkt Witterungseinflüssen, insbesondere auch im Winter durch Streusalz ausgesetzt, so dass sie als Stahlbauteil mit entsprechendem Korrosionsschutz versehen sind. Oftmals werden die hergestellten Lenker in einem KTL-Beschichtungsverfahren mit einem Korrosionsschutz versehen.

Damit die Lenker relativbeweglich an der Kraftfahrzeugkarosserie bzw. am Achshilfsrahmen und auf der anderen Seite an einem Radträger angebunden werden können, sind diese über Lager in Form von Kugelgelenken bzw. Gummimetalllagern drehbeweglich gekoppelt. Diese Lager werden insbesondere in den fertigen Lenker eingepresst. Beispielsweise ist dies aus der DE 10 2009 025 429 A1 bekannt.

Aufgabe der vorliegenden Erfindung ist es daher, ein Herstellungsverfahren für einen Lenker bereitzustellen mit dem es möglich ist, einen Lenker mit Lager unter Verkürzung der Fertigungszeit bei gleichzeitiger Erhöhung der Genauigkeit und Berücksichtigung des Korrosionsschutzes herzustellen.

Die zuvor genannte Aufgabe wird mit einem Verfahren zur Herstellung eines Lenkers für ein Kraftfahrzeug gemäß den Merkmalen im Patentanspruch 1 gelöst.

Die zuvor genannte Aufgabe wird weiterhin mit einem Verfahren zur Herstellung eines Lenkers für ein Kraftfahrzeug gemäß den Merkmalen im Patentanspruch 3 gelöst.

Ein gegenständlicher Teil der Aufgabe wird weiterhin mit einem Umformwerkzeug zur Durchführung des Verfahrens mit den Merkmalen im Patentanspruch 9 gelöst.

Vorteilhafte Ausgestaltungsvarianten der vorliegenden Erfindung sind in den abhängigen Patentansprüchen beschrieben.

Das Verfahren zur Herstellung eines Lenkers aus einem metallischen Werkstoff für ein Kraftfahrzeug zeichnet sich durch folgende Verfahrensschritte aus:
- Bereitstellen einer Blechplatine oder eines Halbzeuges und Einlegen in ein Umformwerkzeug,
- Umformen zu einem Lenker,
- Zuführen eines Lagers und Einpressen des Lagers in den Lenker innerhalb des Umformwerkzeuges,
- Entnahme aus dem Umformwerkzeug.

Mit dem erfindungsgemäßen Verfahren können Lenker als Blechumformbauteile aus verschiedenen metallischen Werkstoffen hergestellt werden. Insbesondere ist es denkbar, Lenker aus Edelstahl, Leichtmetall oder vorverzinktem bzw. vorbeschichtetem, insbesondere vorverzinktem Stahlblech umzuformen. Hierdurch weist der Lenker eine verkürzte Herstellungszeit auf, da keine separate Antikorrosionsbeschichtung aufgebracht werden muss. Bei einem Edelstahl handelt es sich im Rahmen der Erfindung um eine nicht rostende Stahllegierung.

Insbesondere eignet sich das erfindungsgemäße Verfahren zur Herstellung eines einschaligen Lenkers.

Zunächst wird hierzu der Lenker in dem Umformwerkzeug fertig geformt. Nach der Endformgebung des Lenkers verbleibt der Lenker zunächst in dem Umformwerkzeug und das Lager wird eingepresst. Im Anschluss daran kann der Lenker mit eingepresstem Lager entnommen werden. Ein weiterer erfindungsgemäßer Vorteil ist, dass direkt in dem Umformwerkzeug selbst das Lager mit eingepresst wird. Ein separater Montageschritt des Lagers in dem fertig hergestellten Lenker kann somit entfallen.

Die geometrische Präzision eines solchen Lenkers sowie die sich ergebenden kinematischen Anbindungspunkte, insbesondere der Mittelpunkte der Lager, wird gleichzeitig verbessert, wenn der Lenker zunächst endkonturnah vorgeformt wird, dann das Lager eingepresst wird und ein Endformen und optionales Kalibrieren des Lenkers nach dem Einpressen des Lagers erfolgt. Der fertig hergestellte Lenker mit eingepresstem Lager kann somit aus dem Umformwerkzeug entnommen werden und weist gleichzeitig die geforderte Präzision in Bezug auf die geometrische Genauigkeit der Anbindungspunkte in den Lagern zur späteren Montage auf. Zusätzlich zur Endformgebung kann der Lenker mit eingepressten Lagern in dem Umformwerkzeug kalibriert werden. Dies steigert nochmals die Genauigkeit des hergestellten Lenkers mit eingepressten Lagern in Bezug auf die Lage der Anbindungspunkte. Bevorzugt können selbstverständlich beispielsweise im Falle eines Stablenkers auf beiden Seiten die Lager eingepresst werden. Im Falle eines Querlenkers wäre es auch vorstellbar, dass beispielsweise bei einem Dreiecksquerlenker an drei Stellen jeweils ein Lager eingepresst wird.

Es kann auch ein Halbzeug bzw. Vorformling bereitgestellt werden, welcher in das Halbzeug eingelegt wird und dann zu dem Lenker mit eingepresstem Lager umgeformt wird.

Die zuvor genannte Aufgabe wird weiterhin mit einem Verfahren zur Herstellung eines Lenkers aus einem metallischen Werkstoff für ein Kraftfahrzeug mit folgenden Verfahrensschritten gelöst:
- Bereitstellen einer Blechplatine und Einlegen in eine Mehrstufenpresse,
- Umformen zu einem Lenker in mindestens einer ersten Pressenstufe,
- Optional weiteres Umformen zu dem Lenker in mindestens einer weiteren Zwischenstufe,
- Zuführen eines Lagers und Einpressen des Lagers in den Lenker in einer zweiten Pressenstufe,
- Optional Endformen und/oder Kalibrieren des Lenkers in der zweiten Pressenstufe oder in einer dritten Pressenstufe.

Hierzu wird ein Pressenwerkzeug in Form einer Mehrstufenpresse verwendet. Dies bedeutet, dass im gleichen Pressentakt jeweils die einzelnen Werkzeugstufen ausgeführt werden. In einer ersten Pressenstufe wird dabei die in die Mehrstufenpresse eingelegte Blechplatine zu einem Lenker vorgeformt bzw. zu dem Lenker umgeformt. Im Anschluss daran wird die Mehrstufenpresse geöffnet und der zumindest vorgeformte, insbesondere endgeformte Lenker, in eine zweite Pressenstufe überführt. Beim nochmaligen Schließen wird dann in einer zweiten Pressenstufe mindestens ein Lager in den Lenker eingepresst. Gleichzeitig ist in die erste Pressenstufe eine neue Blechplatine eingelegt worden und erneut ein Lenker vorgeformt bzw. endgeformt worden.

Das Umformen zu einem Lenker kann in mindestens einer ersten Pressenstufe erfolgen. Optional wird ein weiteres Umformen zu dem Lenker in mindestens einer weiteren Zwischenstufe durchgeführt. Dies bedeutet, dass die eingelegte Blechplatine oder aber auch ein eingelegtes Halbzeug in der ersten Pressenstufe eine Vorformung erfährt. Sodann wird es in die erste Zwischenstufe überführt und in dieser Zwischenstufe dann beispielsweise bei nur einer Zwischenstufe zu dem Lenker umgeformt. Im Rahmen der Erfindung ist es jedoch auch vorstellbar zwei, drei oder mehr Zwischenstufen durchzuführen, wobei der Lenker in der ersten Pressenstufe und in jeder Zwischenstufe dann eine weitere Formgebung erfährt, um von einer eingangs eingelegten Blechplatine bis zu einem fertigen Lenker umgeformt zu werden.

Nach dem Öffnen der zweiten Pressenstufe kann dann der Lenker mit eingepresstem Lager entnommen werden. Auch hier ist es zur weiteren Steigerung der Genauigkeit möglich, dass der vorgeformte Lenker beim Einpressen des Lagers in der zweiten Pressenstufe endgeformt und/oder kalibriert wird. Auch ist es im Sinne der Erfindung vorstellbar, dass eine dritte Pressenstufe vorgesehen ist und der Lenker nach dem Einpressen des Lagers von der zweiten Pressenstufe in die dritte Pressenstufe überführt wird und in der dritten Pressenstufe endgeformt und/oder kalibriert wird. In der zweiten Pressenstufe ist somit bereits das Lager eingepresst. Im gleichen Pressentakt zur dritten Pressenstufe wird dann wiederum die erste Pressenstufe und die zweite Pressenstufe mit einem jeweils neuen Bauteil ausgeführt. Eine Mehrstufenpresse kann auch als mehrfach fallendes Werkzeug benannt werden.

Bei dem Lager selbst handelt es sich insbesondere um ein Gummimetalllager. Dieses ist besonders bevorzugt als Hülsenlager derart ausgebildet, das eine äußere umlaufende Hülse, insbesondere Stahlhülse, ausgebildet ist, gefolgt radial nach innen von einer Gummischicht und wiederum von einer Innenhülse. Im Sinne der Erfindung ist es jedoch auch möglich, ein Kugelgelenk, welches besonders bevorzugt ein Kugelgelenkkopf mit Pfanne ist, wobei dann die Pfanne eingepresst wird, in den Lenker einzupressen.

Damit der Umformvorgang mit verringerten Umformkräften sowie schonender in Bezug auf die Abstreckung der Oberfläche der umzuformenden Blechplatine durchgeführt wird, wird die Blechplatine unter Einsatz eines Umformöles umgeformt. Das Umformöl verringert die Reibung zwischen Werkzeuginnenfläche des Umformwerkzeugs sowie der umzuformenden Oberfläche der Blechplatine. Hierzu kann das Umformöl entweder in dem Umformwerkzeug zugeführt werden, beispielsweise können die Werkzeugflächen vor Einlegen der Blechplatine benetzt werden. Auch ist es vorstellbar, dass in dem Umformwerkzeug selbst Austrittsdüsen zur fortlaufenden selbständigen Schmierung des sich ergebenden Formhohlraums mit Umformöl vorhanden sind. Im Rahmen der Erfindung ist es jedoch auch möglich, dass die Blechplatine selbst mit Umformöl vorbeschichtet bzw. vorkonfektioniert ist. Mithin weist die in das Umformwerkzeug eingelegte Blechplatine bereits eine Schicht aus Umformöl auf.

Damit nunmehr das Umformöl sich nicht negativ, beispielsweise zersetzend, auf insbesondere die Gummischicht des Gummimetalllagers auswirkt, ist es weiterhin erfindungsgemäß vorgesehen, dass der gesamte Lenker mit dem eingepressten Lager nach Entnahme aus dem Umformwerkzeug gewaschen bzw. gereinigt wird. Dieses Waschen ist auch als Reinigen zu verstehen und wird insbesondere unter Einsatz einer Waschflüssigkeit durchgeführt. Hierbei wird das noch an dem umgeformten Bauteil und/oder dem Lager haftende Umformöl entfernt. Erfindungsgemäß ist es vorgesehen, dass der Waschvorgang abgeschlossen ist, mithin der Lenker mit eingepresstem Lager insbesondere vollständig von dem Umformöl gereinigt ist, spätestens 30 Minuten nach dem Einpressen des Lagers.

Die vorliegende Erfindung betrifft weiterhin ein Umformwerkzeug zur Herstellung eines Blechumformbauteils, wobei ein vorbeschriebenes Verfahren angewandt wird. Das Umformwerkzeug zeichnet sich erfindungsgemäß dadurch aus, dass in einem Unterwerkzeug ein Einpressstempel für das Lager angeordnet ist, wobei der Einpresstempel gegenüber dem Unterwerkzeug relativbeweglich ist.

Mit dem Umformwerkzeug ist es somit möglich zunächst das Bauteil endkonturnah an das umzuformende Bauteil durch Blechumformung herzustellen. Sodann kann durch die relative Beweglichkeit des Einpressstempels das Lager in das endkonturnah hergestellte Bauteil, mithin den endkonturnah hergestellten Lenker, eingepresst werden. Im Anschluss daran wird durch ein Halten und/oder Erhöhen der Pressenkraft das Bauteil, mithin der Lenker, in dem Umformwerkzeug mit dem eingepressten Lager endgeformt und/oder kalibriert.

Somit ist es möglich, einen vollständig hergestellten Lenker mit hoher geometrischer Präzision und bereits eingepresstem Lager im Takt einer Umformpresse herzustellen. Dazu wird das erfindungsgemäße Umformwerkzeug verwendet.

Erfindungsgemäß ist hierzu der Einpressstempel entweder über einen separaten Aktor ansteuerbar. Bei dem Aktor kann es sich um einen pneumatischen, hydraulischen oder auch elektromechanischen Aktor handeln. In einer bevorzugten Ausführungsweise ist jedoch der Einpressstempel über einen Umlenkmechanismus mit dem Antrieb des Umformwerkzeuges gekoppelt.

Insbesondere ist hierzu der Umlenkmechanismus derart ausgelegt, dass die Pressenkraft des Umformwerkzeuges in eine Einpresskraft zum Einpressen des Lagers umgewandelt, insbesondere reduziert wird. Die Pressenkraft des Umformwerkzeuges selber beträgt 300 t bis 1600 t, insbesondere 500 t bis 1000 t. Dies ist insbesondere abhängig von den lokal zu erzielenden Umformgraden sowie dem umzuformenden Werkstoff. Die Einpresskraft zum Einpressen des Lagers hingegen beträgt bevorzugt 4 t bis 10 t, insbesondere 5 t. Der Umlenkmechanismus ist insbesondere derart ausgebildet, dass somit die Pressenkraft, welche durch den Einpressstempel auf das einzupressende Lager übertragen wird, entsprechend reduziert wird.

Damit das Herstellungsverfahren insbesondere automatisiert auf dem Umformwerkzeug durchgeführt werden kann, ist weiterhin vorgesehen, dass ein Zuführkanal zum Zuführen mindestens eines Lagers, insbesondere mehreren Lagern, vorgesehen ist, so dass dem Einpressstempel die Lager zum Einpressen in den endkonturnah geformten Lenker automatisiert zuführbar sind, insbesondere bei geschlossenem Umformwerkzeug. Werden an zwei Enden eines herzustellenden Lenkers zwei Lager eingepresst, können auch zwei Zuführkanäle vorgesehen sein, insbesondere ist für jedes anzupassende Lager ein Einpressstempel vorgesehen.

Das Verfahren ist beispielsweise auf dem Umformwerkzeug derart durchführbar, dass das Umformwerkzeug nach Anliegen der Blechplatine um bis zu 80%, insbesondere bis zu 90%, besonders bevorzugt bis zu 95% der Endkontur entspricht. Bei einem weiteren Schließen wird dann das Lager eingepresst und im Anschluss daran ein endgültiges Schließen bis in den unteren Totpunkt durchgeführt. Hierbei wird die Endformgebung des Lenkers während oder nach dem Einpressen des Lagers durchgeführt. Nach dem anschließenden Öffnen des Umformwerkzeuges wird dann der fertig hergestellte Lenker mit eingepresstem Lager entnommen und einer weiteren Verarbeitung zugeführt. Diese weitere Verarbeitung ist insbesondere ein Waschvorgang, so dass ein Umformöl abgewaschen wird.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: einen in Rede stehenden Lenker mit Lager,
- Figur 2: den schematischen Verfahrensablauf und
- Figur 3: ein erfindungsgemäßes Umformwerkzeug.

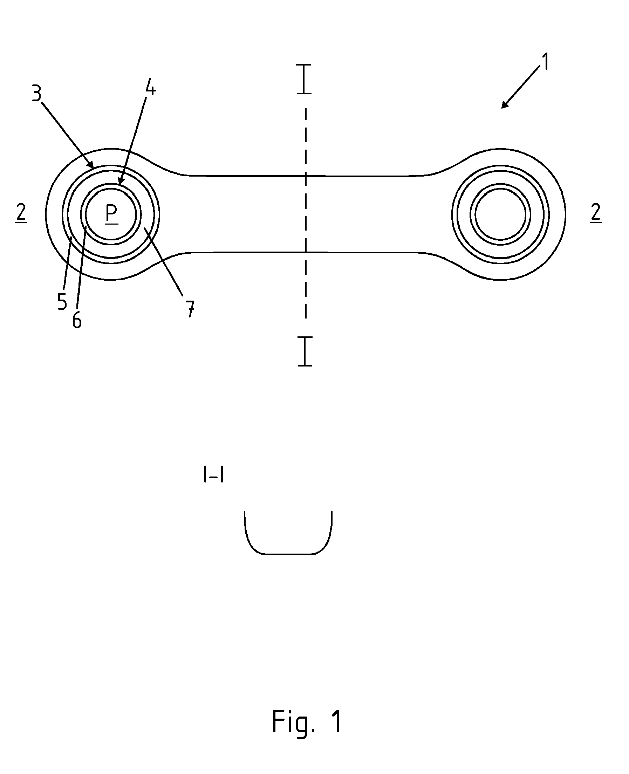

Figur 1 zeigt ein mit dem erfindungsgemäßen Verfahren hergestellten Lenker 1 als Stablenker. An jedem Ende 2 des Lenkers 1 ist in einem Auge 3 ein Lager 4 in Form eines Gummimetalllagers eingepresst. Das Gummimetalllager weist eine äußere Hülse 5 und eine innere Hülse 6 auf sowie dazwischen angeordnet eine Gummischicht 7. Die äußere Hülse 5 ist dabei in das Auge 3 eingepresst. Ferner dargestellt gemäß I-I ist eine Querschnittsansicht. Gut zu erkennen ist, dass der Lenker 1 als im Querschnitt C-förmiges Bauteil hergestellt ist. Durch die innere Hülse 6 ist ein Anbindungspunkt P geometrisch definiert, um den der Lenker 1 nach Montage an eine Achse schwenkt.

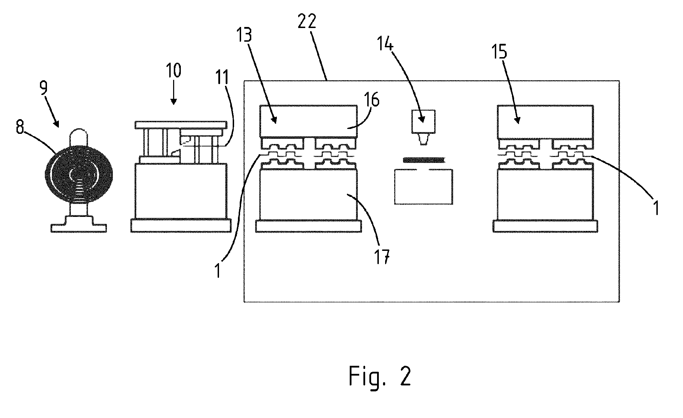

Ein schematischer Verfahrensablauf zur Herstellung des Lenkers 1 ist in Figur 2 dargestellt. Demnach wird ein Blech von einem Coil 9 abgewickelt und in einer Vereinzelungsstation 10 zu Blechplatinen 11 vereinzelt. Diese Blechplatine 11 wird in einer Mehrstufenpresse 22 in einer ersten Pressenstufe 13 endkonturnah zu einem Lenker 1 umgeformt. Anschließend wird in einer zweiten Pressenstufe 14 das Lager 4 eingepresst. Anschließend wird in einer dritten Pressenstufe 15 der Lenker 1 mit dem eingepressten Lager 4 endgeformt und/oder kalibriert. Die erste Pressenstufe 13, zweite Pressenstufe 14 und dritte Pressenstufe 15 werden bevorzugt in der gleichen Mehrstufenpresse 22, angedeutet durch den außen umlaufenden schwarzen Kasten, durchgeführt. Die Mehrstufenpresse 22 weist dazu ein Oberwerkzeug 16 und ein Unterwerkzeug 17 auf, welche geöffnet und geschlossen werden und somit alle einzelnen Pressenstufen 13, 14, 15 im gleichen Pressentakt durchgeführt werden. Nicht näher dargestellt ist eine Transfereinrichtung, um die Bauteile zwischen erster 13 und zweiter Pressenstufe 14 sowie zweiter 14 und dritter Pressenstufe 15 jeweils von der ersten 13 in die zweite Pressenstufe 14 und von der zweiten 14 in die dritte Pressenstufe 15 zu überführen.

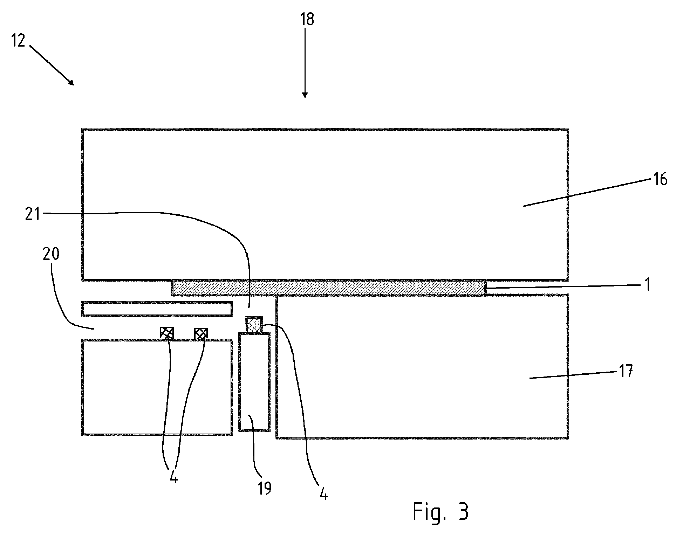

Alternativ ist es auch möglich, dass der Lenker 1 in einem Umformwerkzeug 12 hergestellt wird, so dass alle vorbeschriebenen drei Pressenstufen 13, 14, 15 gleichzeitig in einem Pressenschritt durchgeführt werden. Mithin wird ein Pressentakt ausgeführt und der fertige Lenker 1 mit eingepresstem Lager 4 entnommen. Nähergehend beschrieben ist dies nachfolgend in Figur 3.

Figur 3 zeigt eine schematische Ansicht des erfindungsgemäßen Umformwerkzeuges 12, aufweisend das Oberwerkzeug 16 sowie ein Unterwerkzeug 17. In Pressenschließrichtung 18 wird das Oberwerkzeug 16 auf das Unterwerkzeug 17 abgesenkt. Ist der dazwischen befindliche Lenker 1 endkonturnah umgeformt, wird ein Einpressstempel 19 relativbeweglich zu dem Unterwerkzeug 17 verfahren. Am vorderen Ende 2 befindet sich ein Lager 4, welches in den Lenker 1 eingepresst wird. Hierzu kann der Lenker 1 bereits mit Löchern zur Ausbildung der Augen 3 vorkonfektioniert sein. Die Blechplatine 11 weist vor Beginn der Umformung diese Löcher auf. Im Rahmen der Erfindung kann jedoch auch durch eine Zwischenstufe das Loch in den endkonturnah geformten Lenker 1 eingestanzt werden. Auch ist es vorstellbar, dass der Einpressstempel 19 bzw. mit Einpressen des Lagers 4 das Loch ausstanzt. Ferner vorgesehen ist ein Zuführkanal 20 in dem Umformwerkzeug 12, um dem Pressenstempel weitere Lager 4 zuzuführen. Nach Entnahme des Lenkers 1 mit eingepresstem Lager 4 wird erneut eine Blechplatine 11 eingeführt sowie das Oberwerkzeug 16 wiederum in Pressenschließrichtung 18 zur endkonturnahen Formung des Lenkers 1 abgesenkt. Ein über den Zuführkanal 20 dem Einpressstempel 19 zugeführtes neues Lager 4 kann dann in den neu endkonturnah geformten Lenker 1 eingepresst werden. Damit das Lager 4 auf dem Einpressstempel 19 für den Einpressvorgang gehalten ist, ist ein nicht näher dargestellter Aufnahme- und/oder Zentrierfortsatz vorgesehen. Auch kann ein Einpresskanal 21 mit seiner Innenmantelfläche an die äußere Kontur des Lagers 4 angepasst sein und das Lager 4 somit während des Einpressens formschlüssig in das Auge 3 überführen. Die Ausgestaltung betreffend des Einpressstempels 19 gemäß Figur 3 kann auch in die zweite Pressenstufe 14 der Mehrstufenpresse 22 integriert sein.

### Bezugszeichen:

- 1 -: Lenker
- 2 -: Ende zu 1
- 3 -: Auge
- 4 -: Lager
- 5 -: äußere Hülse
- 6 -: innere Hülse
- 7 -: Gummischicht
- 8 -: Blechwand
- 9 -: Coil
- 10 -: Vereinzelungsstation
- 11 -: Blechplatine
- 12 -: Umformwerkzeug
- 13 -: erste Pressenstufe
- 14 -: zweite Pressenstufe
- 15 -: dritte Pressenstufe
- 16 -: Oberwerkzeug
- 17 -: Unterwerkzeug
- 18 -: Pressenschließrichtung
- 19 -: Einpressstempel
- 20 -: Zuführkanal
- 21 -: Einpresskanal
- 22 -: Mehrstufenpresse

- P -: Anbindungspunkt

## Patentansprüche

1. Verfahren zur Herstellung eines Lenkers (1) aus einem metallischen Werkstoff für ein Kraftfahrzeug, **gekennzeichnet, durch** folgende Verfahrensschritte:
- Bereitstellen einer Blechplatine (11) oder eines Halbzeuges und Einlegen in ein Umformwerkzeug (12),
- Umformen zu einem Lenker (1),
- Zuführen eines Lagers (4) und Einpressen des Lagers (4) in den Lenker (1) innerhalb des Umformwerkzeuges (12),
- Entnahme aus dem Umformwerkzeug (12).

2. Verfahren nach Anspruch 1, **dadurch gekennzeichnet, dass** der Lenker (1) in dem Umformwerkzeug (12) zunächst endkonturnah geformt wird, dann das Lager (4) eingepresst wird und anschließend der Lenker (1) endgeformt und/oder kalibriert wird.

3. Verfahren zur Herstellung eines Lenkers (1) aus einem metallischen Werkstoff für ein Kraftfahrzeug, **gekennzeichnet, durch** folgende Verfahrensschritte:
- Bereitstellen einer Blechplatine (11) und Einlegen in eine Mehrstufenpresse (22),
- Umformen zu einem Lenker (1) in mindestens einer ersten Pressenstufe (13),
- Optional weiteres Umformen zu dem Lenker (1) in mindestens einer weiteren Zwischenstufe,
- Zuführen eines Lagers (4) und Einpressen des Lagers (4) in den Lenker (1) in einer zweiten Pressenstufe (14),
- Optional Endformen und/oder Kalibrieren des Lenkers (1) in der zweiten Pressenstufe (14) oder in einer dritten Pressenstufe (15).

4. Verfahren nach einem der Ansprüche 1 bis 3, **dadurch gekennzeichnet, dass** das Lager (4) ein Gummi-Metalllager ist oder dass das Lager (4) ein Kugelgelenk ist.

5. Verfahren nach einem der Ansprüche 1 bis 4, **dadurch gekennzeichnet, dass** eine Blechplatine (11) aus vorverzinktem Stahlblech oder aus Leichtmetall oder aus Edelstahl verwendet wird.

6. Verfahren nach einem der Ansprüche 1 bis 5, **dadurch gekennzeichnet, dass** zum Umformen ein Umformöl verwendet wird, wobei das Umformöl in dem Umformwerkzeug (12) zugeführt wird oder dass die Blechplatine (11) eine Schicht aus Umformöl aufweist.

7. Verfahren nach einem der Ansprüche 1 bis 6, **dadurch gekennzeichnet, dass** der fertig geformte Lenker (1) mit dem Lager (4) gewaschen wird, insbesondere zur Entfernung des Umformöls.

8. Verfahren nach dem vorhergehenden Anspruch, **dadurch gekennzeichnet, dass** das Waschen unter Einsatz einer Waschflüssigkeit durchgeführt wird, insbesondere dass das Waschen abgeschlossen ist, spätestens 30 min. nach Einpressen des Lagers (4).

9. Umformwerkzeug zur Herstellung eines Lenkers (1) als Blechumformbauteil, zur Durchführung eines Verfahrens nach mindestens Anspruch 1 oder 3, **dadurch gekennzeichnet, dass** in einem Unterwerkzeug (17) ein Einpresstempel (19) für das Lager (4) relativbeweglich zu dem Unterwerkzeug (17) angeordnet ist.

10. Umformwerkzeug nach Anspruch 9, **dadurch gekennzeichnet, dass** der Einpresstempel (19) über einen separaten Aktor ansteuerbar ist oder dass der Einpresstempel (19) über einen Umlenkmechanismus mit dem Umformwerkzeug (12) gekoppelt ist.

11. Umformwerkzeug nach Anspruch 10, **dadurch gekennzeichnet, dass** der Umlenkmechanismus die Pressenkraft des Umformwerkzeuges (12) in eine Einpresskraft zum Einpressen des Lagers (4) reduziert, insbesondere beträgt die Pressenkraft von 300 t bis 1600 t, bevorzugt 500 t bis 1000 t und die Einpresskraft 4 t bis 10 t, bevorzugt 5 t.

12. Umformwerkzeug nach einem der Ansprüche 9 bis 11, **dadurch gekennzeichnet, dass** in dem Umformwerkzeug (12) ein Zuführkanal (20) zum Zuführen von Lagern (4) vorgesehen ist, so dass dem Einpresstempel (19) die Lager (4) zum Einpressen in den endkonturnah geformten Lenker (1) zuführbar sind, insbesondere bei geschlossenem Umformwerkzeug (12).
